# EUROPEAN PATENT APPLICATION

(11) **EP 1 447 001 A1**
(43) Date of publication of application: **18.08.2004**
(21) Application number: 04075483.0
(22) Date of filing: 13.02.2004
(51) Int. Cl.: A01J 5/017

(54) **Device and method for milking animals**

(30) Priority: 15.02.2003 NL 1022701
(71) Applicant: PROLION B.V., 2141 BS Vijfhuizen (NL)
(72) Inventor: Dessing, Jacobus Petrus Maria, 2134 EM Hoofddorp (NL); Dronkert, Johannes Adriaan, 3176 VA Poortugaal (NL); Nugteren, Robert Jan, Ballantray Ontario L4A 7X4 (CA)
(74) Representative: Uittenbogaart, Gustaaf Adolf

(57) **Abstract**

The invention relates to a device and method for milking animals, in which the milking cups are placed on a milking rack which is moved under the animal to be milked by a milking robot. A sensor (38) with a horizontal detection field detects the position of the teats, and the milking cup is fitted around the teat by virtue of the milking robot being moved upwards, with the detection field remaining at the same height with respect to the animal which is to be milked.

## Description

The invention relates to a device in accordance with the preamble of Claim 1. Devices of this type are known. The drawback of the known device is that while a milking cup is being fitted, the milking cup has to be moved upwards around the teat with respect to the milking rack, since otherwise the sensor and the detection field come into contact with the bottom of the udder. Another drawback is that to detect the vertical position of the teats, the entire milking rack has to be moved upwards by the milking robot, which requires additional time.

To avoid these drawbacks, the device is designed in accordance with the characterizing clause of Claim 1. This allows the milking cups to be moved upwards around the teats by the milking rack. Also, the height of the teats can be determined immediately after the milking rack has been moved under the animal as a result of the detection field being moved upwards independently of the milking rack.

The invention also comprises a device in accordance with Claim 2. This results in a simple and robust structure of the second sensor.

The invention also comprises a device in accordance with Claim 3. This means that it is not necessary for each milking rack to have its own sensors, which saves costs.

The invention also relates to a device in accordance with the preamble of Claim 4. Devices of this type are known. The drawback of the known device is that for the vertical movement of the milking rack the milking robot exerts the vertical force on the milking rack via the long arms of the milking robot. This vertical force moves the milking rack and also the bearing arms and, via the long bearing arms, the arm frame in the vertical direction. This requires a heavy and robust construction of the robot, which is disadvantageous.

To avoid this drawback, the device is designed in accordance with the characterizing clause of Claim 4. This allows the vertical adjustment force to be transmitted directly from the milking robot to the arm frame and means that the robot arms are only subject to load from forces in the horizontal plane and can therefore be of more lightweight design.

The invention also comprises a method in accordance with the preamble of Claim 5. A method of this type is known and has the drawback that the milking cup has to be moved upwards with respect to the milking rack or the milking robot, so that the teat can be attached. For this purpose, the milking cup has to have a lifting device, which means that the construction is damageable and susceptible to faults.

To avoid this drawback, the method is carried out in accordance with Claim 5. This means that the stable lifting structure for the milking arm which is already present can be used for the fitting of the milking cups.

In accordance with a refinement, the method is carried out in accordance with Claim 6. This means that the milking cups which are still to be fitted do not disturb the first detection field, meaning that fitting can be carried out more quickly.

In accordance with a refinement, the method is carried out in accordance with Claim 7. This allows the second sensor to be designed without a lifting device.

The invention is explained below on the basis of a number of exemplary embodiments and with the aid of a drawing, in which:
Figure 1 shows a diagrammatic plan view of a milking device with a milking robot and a milking rack,
Figure 2 shows a perspective view of a detail of coupling of the milking robot to the milking rack,
Figure 3 shows a perspective view of the milking rack shown in Figure 1 with the milking cups in the horizontal position,
Figure 4 shows a perspective view of the milking rack shown in Figure 1 with the milking cups in a vertical position,
Figure 5 shows a diagrammatic plan view of the milking robot and milking rack from Figure 1, and
Figure 6 shows a diagrammatic side view of the milking robot and milking rack from Figure 1.

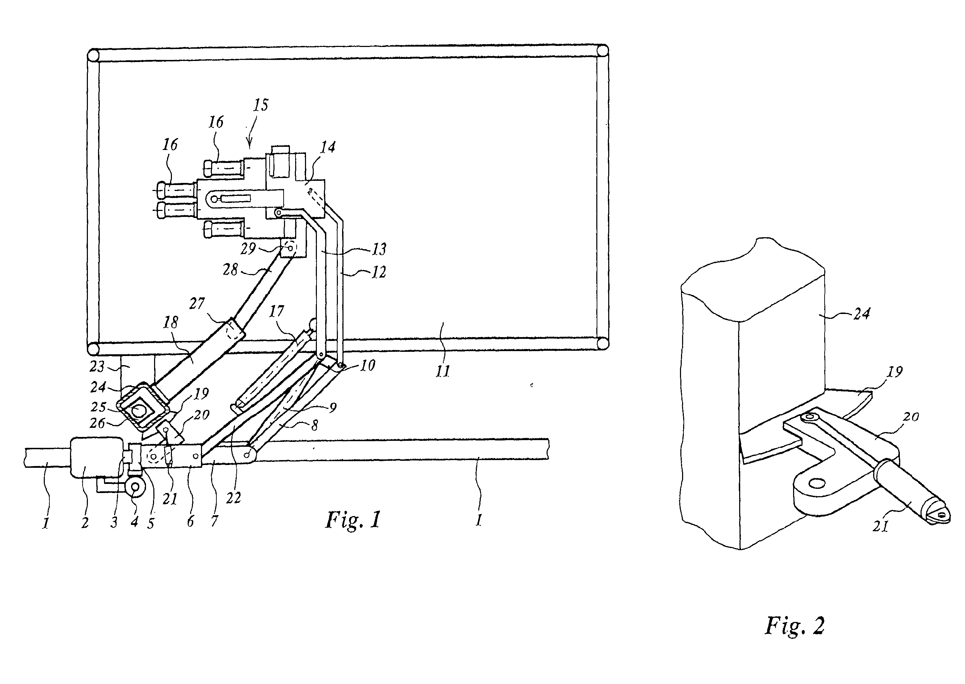

Figure 1 shows a milking stall 11 with a milking rack 15, in which four milking cups 16 are secured, at the location of the udder of an animal which is to be milked; the milking cups 16 are in a horizontal position. The milking rack 15 is coupled to a second bearing arm 28 by means of a pivot joint 29. The second bearing arm 28 is coupled to a first bearing arm 18 by means of a pivot joint 27. The first bearing arm 18 is secured to an arm frame 24 and can, by means of bearings 26, be moved vertically along and rotate about a pin 25. The pin 25 is secured between two supports 23 along the side on the outside of the milking stall 11. Also, a cable with counterweight (not shown), which is secured to the arm frame 24 and compensates for the weight of arm frame 24, the bearing arms 18 and 28 and the milking rack 15, is fitted at the supports 23, with the result that the milking rack 15 does not move downwards or upwards under the influence of the force of gravity, but rather remains in the same height as a result of friction.

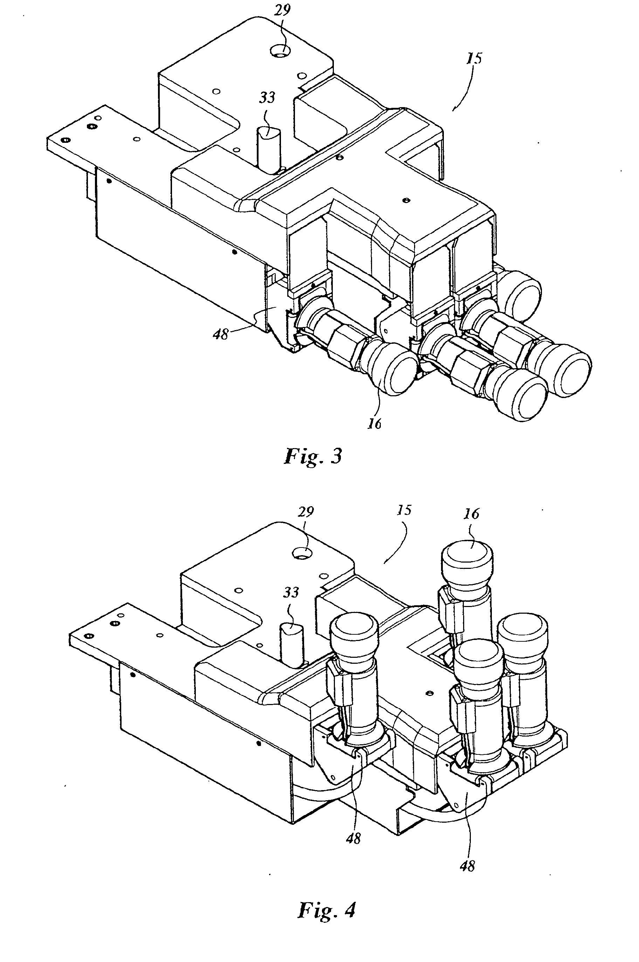

To enable the milking rack 15 to be positioned beneath an animal which is to be milked and to enable the movements of the animal to be tracked during fitting of the milking cups 16, there is a milking robot 49, a frame 2 of which is mounted between rails 1. After the milking cups 16 have been connected to the teats of the animal in the milking stall 11, the milking robot 49 can move onto the next milking stall along the rails 1 by means of a drive (not shown), while milking in milking stall 11 can continue and can then be terminated. After the milking operation has been terminated, the milking rack 15 moves towards a known starting position outside the milking stall 11 under the influence of pneumatic cylinders (not shown), and waits in this starting position until the milking robot 49 returns and it is moved back into the milking stall 11 in order to milk a subsequent animal. The movements of the milking robot 49 and also of the other components take place under the influence of an automatic control unit (not shown). The frame 2 is mounted between the rails 1, and rail 3, along which a carriage 5 can move under the influence of a positioning drive 4, is arranged in the vertical direction along the side of the frame 2. A robot frame 6, which can be coupled to the arm frame 24 with the aid of a gripper 20, cf. also Figure 2, is secured to the carriage 5. The gripper 20 can be moved by a pneumatic cylinder 21 and can engage around the coupling plate 19, with the result that the vertical movement of the arm frame 24 is directly coupled to the positioning drive 4.

The milking robot 49 is connected, by means of a first robot arm 22, to a second robot arm 13 via a pivot joint, and the second robot arm 13 is pivotably connected to a coupling plate 14. The coupling plate 14 is coupled to the milking rack 15, in a manner which will be discussed below. The movements of the first robot arm 22 are carried out by a positioning drive 9, and the movements of the second robot arm are carried out by a positioning drive 17. To ensure that the coupling plate 14 always maintains the same orientation and remains parallel to the milking stall, a coupling arm 8 is arranged between a support 7 and a support 10, and a coupling arm 12 is arranged between the support 10 and the coupling plate 14. With the aid of the positioning drives 4, 9 and 17, the coupling plate 14 can be moved accurately under the animal which is to be milked and therefore also the milking rack 15 coupled to the coupling plate 14.

Figure 3 shows a perspective view of the milking rack 15, with the milking cups 16 each secured horizontally in a holder 48. A positioning pin 33, to which the coupling plate 14 can be coupled, is secured to the top side of the milking rack 15. Figure 4 shows the same milking rack 15. The holders 48 are now tilted and the milking cups 16 are in a vertical position. This situation will not often arise, since the milking cups 16 are generally tilted one by one while they are being fitted. The milking cups 16 are only positioned vertically during cleaning of the milking cups 16, since jet means are then moved into the teat opening. This is effected by means of a plate with four jet means being moved towards and into the milking cups 16 from above.

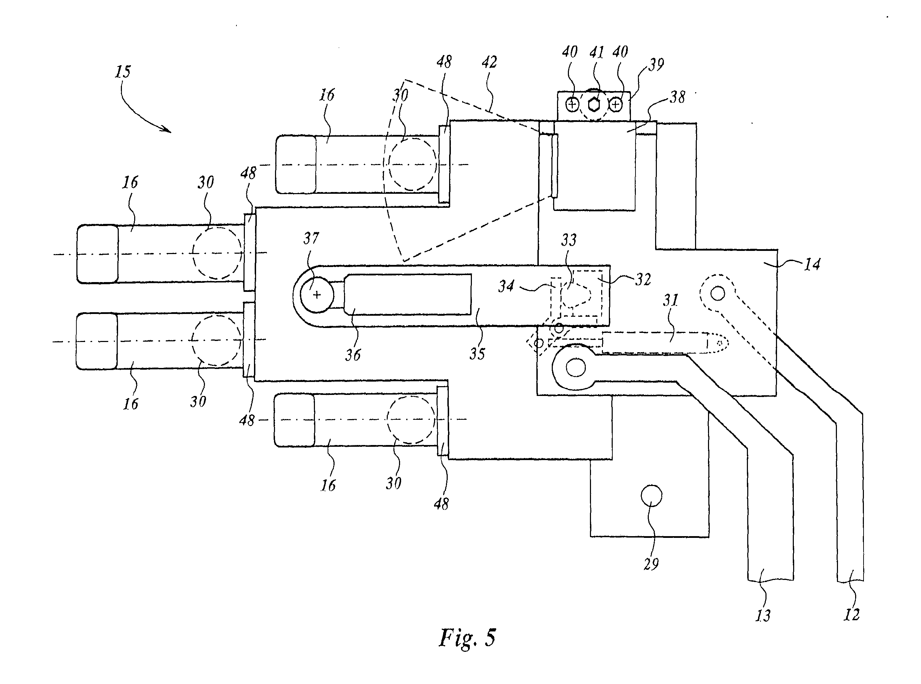

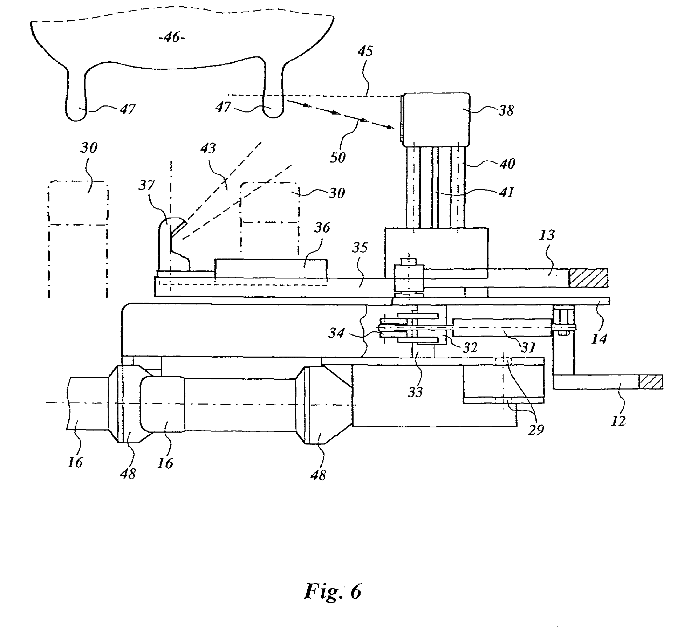

Figures 5 and 6 show the milking rack 15 and the coupling plate 14 coupled to it in more detail, with the milking cups shown in a horizontal position, and a vertical position 30 of the milking cups also being indicated by a dashed line. A positioning block 32 is secured to the underside of the coupling plate 14, and the shape of this positioning block 32 is such that it fits accurately around the positioning pin 33, in such a manner that the positioning pin 33 and therefore the milking rack 15 cannot rotate about a vertical axis. A pressure-exerting piece 34 activated by a pneumatic cylinder 31 presses the positioning pin 33 into the positioning block 21.

A laser sensor 38, which is secured to a carriage 39 whose height can be adjusted along two guides 40 by a positioning drive 41, is placed on the coupling plate 14. The two guides 40 are secured to the coupling plate 14 in a known way. The laser sensor 38 emits a beam 42 of laser light, the beam 42 being in the shape of a segment of a circle in a radiation plane 45. An udder 46 has a teat 47, and the light beam 50 which is reflected by the teat 47 is received in the laser sensor 38, which can determine the position of the teats in a known way.

A rotating sensor 37 is used to detect the position of the teats 47 with respect to one another. The rotating sensor 47 emits an ultrasonic sound beam with a conical detection region 43. For rotation of the sensor 37 there is a sensor drive 36 which is mounted on a sensor arm 35. The sensor arm 35 is mounted on the coupling plate 14.

After the milking robot 49 has moved the milking rack 15 under the animal which is to be milked, with the milking cups 16 lying in a horizontal position, the laser sensor 38 is moved upwards until the underside of a teat 47 is located. It is then checked in a known way whether this is the correct teat 47, i.e. the reference teat, in this case the front left teat. After it has been established that it is the correct teat, the position of the other teats is determined with respect to this teat by means of the rotating sensor 37. The latter is activated inter alia by the sensor drive 36 being switched on and the milking rack 15 with the coupling plate 14 being moved upwards by the positioning drive 4 (cf. Figure 1), with the positioning drive 41 holding the laser sensor 38 at the same height with respect to the animal which is to be milked. In the exemplary embodiment shown, this is achieved by an opposed coupling of the vertical movements of the milking rack 15 and the sensor 38 via the electronic control unit of the milking device. In addition to the electronic coupling shown here, other couplings are also conceivable, such as a coupling of the movements by means of Bowden cables or with the aid of hydraulics. After the positions of the teats 47 are known with the aid of the rotating sensor 37 in the control unit, the milking rack 15 can be lowered again and the milking cups 16 can be connected.

Also, during connection of the milking cups 16, the laser sensor 38 remains directed at the same height of the reference teat. First of all, one of the back milking cups 16 is moved into the vertical position. The milking cup 16 is then moved so that its teat opening is beneath the corresponding teat and the milking rack 15 is moved upwards so that the milking cup 16 surrounds the teat. Since a vacuum is prevailing in the teat opening, the milking cup 16 attaches itself around the teat by suction and remains hanging from the udder 46. If appropriate, milking is started for that milking quarter of the udder. After it has been detected that the teat is inside the milking cup 16, the milking rack 15 is lowered and the milking cup 16 is lifted out of the holder. Then, the same cycle is repeated for the remaining three teats.

Then, the milking rack 15 is detached from the coupling plate 14 by activation of the pneumatic cylinder 31, and the arm frame 24 is detached from the robot frame 6 by activation of the pneumatic cylinder 21. The milking robot 49 is then free from the milking rack 15 and can move on to the next stall.

## Claims

1. Device for automatically milking animals, comprising a milking rack (15) with milking cups (16), a milking robot (49), which can be coupled to the milking rack or forms part of the milking rack, for moving the milking rack, a first sensor (38) which can be used to determine the position of a teat (47) with respect to a milking cup, a first detection field (42), which is generated by the first sensor and extends more or less horizontally above one or more milking cups, and a control unit for controlling, inter alia, the milking robot on the basis of position information obtained by the sensor, **characterized in that** there are positioning means (41), which are coupled to the first sensor (38), for changing the height of the first detection field (42) above the one or more milking cups (16).

2. Device according to Claim 1, in which there is a second sensor (37) with a second detection field (43) for detecting the position of two or more teats (47) with respect to one another, the second detection field having a constant height with respect to the one or more milking cups (16).

3. Device according to Claim 1 or 2, in which the milking robot (49) comprises a coupling plate (14), which can be moved under the animal to be milked and can be coupled to the milking rack (15), and the first sensor (38) and/or the second sensor (37) are mounted on the coupling plate.

4. Device for automatically milking animals, comprising a milking rack (15) with milking cups (16), which is secured, by means of bearing arms (18, 28) which can move in the horizontal direction, to an arm frame (24) which can move in the vertical direction, a milking robot (49) for moving the milking rack, provided, inter alia, with a coupling plate (14), which can be positioned beneath the animal and is secured, by means of robot arms (13, 22) which can move in the horizontal direction, to a robot frame (6), which can move in the vertical direction and has first coupling means (31-34) for coupling the coupling plate to the milking rack, **characterized in that** the milking robot (49) is provided with second coupling means (20, 21) for coupling the robot frame (6) to the arm frame (24) in such a manner that the arm frame follows the vertical movements of the robot frame.

5. Method for automatically fitting milking cups (16) around teats (47) of an animal which is to be milked, in which the milking cups are supported by a milking rack (15) and a milking robot (49) which forms part of or is coupled to the milking rack and moves the milking cups under the animal, after which a first sensor (38), which is positioned on the milking robot and has a more or less horizontal first detection field (42), determines the position of a teat, and a milking cup is moved under a teat and fitted around the teat, **characterized in that** while the milking cup (16) is being fitted, the milking rack (15) with the milking cup is moved upwards and the first sensor (38) with the first detection field (42) is held at a constant height with respect to the animal which is to be milked.

6. Method according to Claim 5, in which the milking cups (16), before being moved under the animal, lie in a horizontal position in a holder (48) in the milking rack (15), and are moved into the vertical position by the holder (48) just before being attached to the teat.

7. Method according to Claim 5 or 6, in which the position of the teats with respect to one another is established by a second sensor (37) with a second detection field (43) as a result of the second sensor being moved upwards with the milking robot (49) while the first sensor (38) with the first detection field (42) is held at a constant height with respect to the animal which is to be milked.
